# EUROPÄISCHE PATENTSCHRIFT

(11) **EP 0 528 106 B1**
(45) Veröffentlichungstag und Bekanntmachung des Hinweises auf die Patenterteilung: **14.06.1995**
(21) Anmeldenummer: 92105897.0
(22) Anmeldetag: 06.04.1992
(51) Int. Cl.: B29D 17/00

(54) **Vorrichtung zum selbsttätigen Giessen, Beschichten, Lackieren, Prüfen und Sortieren von Werkstücken**
Device for automatic casting, coating, painting testing and sorting of workpieces
Dispositif automatique pour le coulage, le revêtement la peinture, la vérification et le tri de pièces

(30) Priorität: 19.08.1991 DE 4127341
(43) Veröffentlichungstag der Anmeldung: 24.02.1993
(73) Patentinhaber: LEYBOLD AKTIENGESELLSCHAFT, D-63450 Hanau (DE)
(72) Erfinder: Novak, Emmerich, W-6053 Obertshausen 2 (DE); Seiler, Reiner, W-6450 Hanau (DE)

(56) Entgegenhaltungen:
- WO-A-86/00741
- DE-A- 2 406 322
- FR-A- 1 317 122
- GB-A- 1 050 603
- US-A- 3 260 775
- PLASTVERARBEITER Bd. 38, Nr. 5, Mai 1987, SPEYER Seiten 70 - 71 'Compact Disc-Metallisierungs-Anlage Rund um wirtschaftlich'

## Beschreibung

Die Erfindung betrifft eine Vorrichtung zum selbsttätigen Gießen, Beschichten, Lackieren, Prüfen und Sortieren von Werkstücken - insbesondere von kreisscheibenförmigen, flachen Substraten aus Kunststoff, wie beispielsweise optischen oder magnetooptischen Datenspeichern - mit mindestens einer die Substrate von einer Herstellstation - beispielsweise einer Spritzgießmaschine - zu den Bearbeitungsstationen weiterbefördernden Transporteinrichtung und mit jeweils einer Ablagestation zur getrennten Ablage von fertig bearbeiteten und als einwandfrei befundenen und von mit Fehlern behafteten Werkstücken.

Bekannt sind Vorrichtungen oder Anlagen der in Frage stehenden Art, bei denen die einzelnen Bearbeitungsstationen in einer Linie hintereinanderstehend auf dem Boden der Fertigungsstätte aufgestellt sind, wobei die Werkstücke von mehreren Handhabungssystemen von der einen Fertigungsstation zur nächsten weiter transportiert werden. Ein Nachteil einer solchen Fertigungslinie besteht in ihrem großen Platzbedarf und auch in den hohen Beschaffungskosten, insbesondere da die Handhabungssysteme zumindest teilweise mit Transportarmen ausgerüstet sein müssen, die die Werkstücke in einem ersten Transportschritt quer zur Haupttransportlinie bzw. zum Werkstückfluß und anschließend wieder entgegengesetzt bewegen müssen.

Die Druckschrift "Plastverarbeiter", Bd 38, Nr. 5, 1987, erwähnt solche konventionellen Fertigungslinien zur CD-Herstellung und beschreibt eine Vorrichtung, die dahingehend weiterentwickelt wurde, daß ein kreisförmiger Durchlauf der Werkstücke durch die Metallisierungsanlage erfolgt, womit ein höherer Durchsatz und ein geringeren Platzbedarf erreicht werden.

Der vorliegenden Erfindung liegt die Aufgabe zugrunde, den Produktionsablauf insbesondere bei der CD-Fertigung zu verbessern und insbesondere den Aufwand beim Handhabungssystem zu verringern. Die Vorrichtung soll mit einem einfach ausgebildeten Handhabungssystem arbeiten und ohne ein Transportband auskommen.

Diese Aufgabe wird erfindungsgemäß durch eine Transporteinrichtung mit einem längs einer geraden Linie hin und her bewegbaren Transportschlitten mit jeweils drei beiderseits des Schlittens angeordneten Transportarmen mit Substrathaltern gelöst, mit einer auf der einen Seite des Transportschlittens vorgesehenen Vakuumbeschichtungsvorrichtung und einer auf der anderen Seite des Transportschlittens angeordneten Ablageeinrichtung mit mindestens je einer Ablage für gut befundene und für auszusondernde Substrate und einer Vorrichtung zur Qualitätsprüfung und mit einer in der Bewegungsrichtung des Transportschlittens, der Spritzgießmaschine gegenüberliegend angeordneten Karussell-Transporteinrichtung oder einem Drehtisch mit verschiedenen, an seinen Umfang angeordneten Lackier-, Trocknungs-, Bedruckungs-, Bildkontroll- und Substrat-Zentriereinrichtungen, wobei der Drehtisch die Substrate in einer Vielzahl von Transportschritten - vorzugsweise in neunzehn Transportschritten - auf einer Kreisbahn um volle 360° um die vertikale Rotationsachse des Drehtisches bewegt und wobei der Transportschlitten bei seiner Bewegung in der einen Richtung mit seinem ersten Arm ein erstes Substrat in einem einzigen Transportschritt von der Übernahmestation der Abgabestation zur Ein- bzw. Ausschleusstation der Vakuumbeschichtungsvorrichtung transportiert und ebenso mit dem Transportarm ein zweites Substrat von der Beschichtungsstation zu einer Lackierstation und ebenso ein drittes Substrat von der Lackierstation zum Drehtisch bewegt, der sich schrittweise und im gleichen Takt dreht, und wobei der Transportschlitten bei seiner anschließenden Bewegung in entgegengesetzter Richtung ein fertig bearbeitetes Werkstück zur Prüfvorrichtung und ein bereits geprüftes Werkstück zur ersten Ablage oder ein Werkstück von hier aus zur zweiten Ablage transportiert.

Vorzugsweise verläuft dabei die Bewegungsbahn des mit sechs Transportarmen ausgestatteten Transportschlittens einerseits etwa rechtwinklig zur Längserstreckung der Spritzgießmaschine und schneidet andererseits etwa die Rotationsachse des Drehtisches, wobei die Übernahmestation, die Ein- und Ausschleusstation, die Lackierstation und eine Substrathalterung des Drehtisches auf einer der Bewegungsbahn parallelen Geraden angeordnet sind.

Weitere Einzelheiten und Merkmale sind in den Patentansprüchen näher beschrieben und gekennzeichnet.

Die Erfindung läßt die verschiedensten Ausführungsmöglichkeiten zu; eine davon ist in den anhängenden Zeichnungen schematisch näher dargestellt, und zwar zeigen:

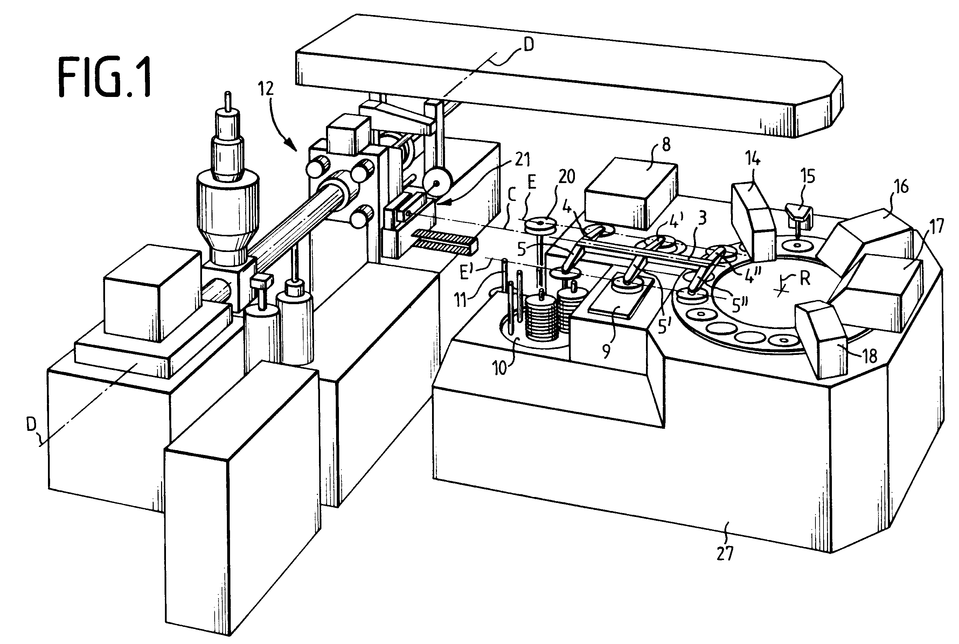

- Figur 1: die erfindungsgemäße Vorrichtung in perspektivischer Ansicht und

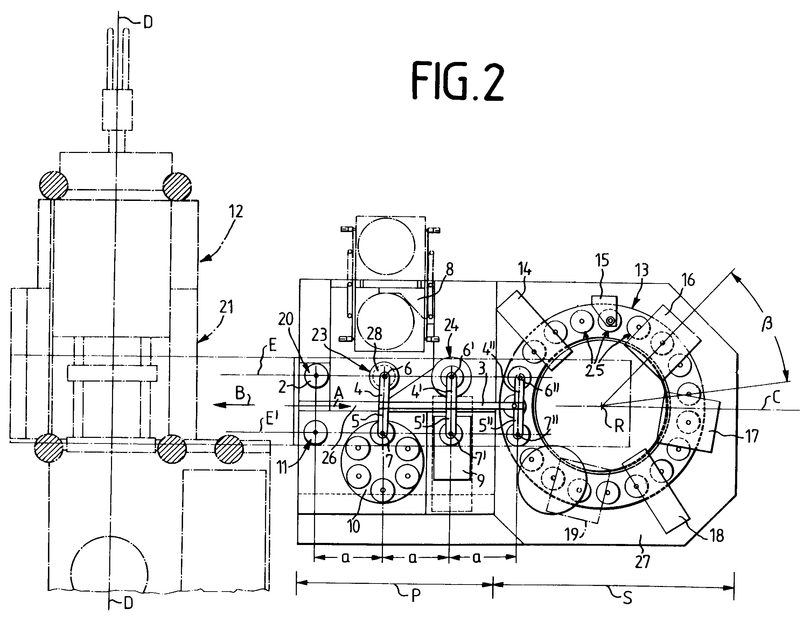

- Figur 2: die Draufsicht auf die Vorrichtung gemäß Figur 1.

Die dargestellte Vorrichtung dient der vollautomatischen Herstellung von Compact Discs, sogenannten CD's.

Der Produktionsablauf der CD-Herstellung erfolgt in einzelnen Prozeßeinheiten, die über zwei Handhabungssysteme miteinander verbunden sind.

Die erfindungsgemäße Vorrichtung besteht im wesentlichen aus zwei Hauptteilen P und S.

Der erste Teil P übernimmt folgende Funktionen:
o Übernehmen der Substrate 2, die von der Spritzgießmaschine 12 an einer Übergabestation 20 abgelegt werden
o Übergabe der Substrate 2 an eine spezielle Vakuumbeschichtungseinrichtung 8
o Entnahme der metallisierten Substrate bei 23
o Übergabe der Substrate 2 an eine Lackierstation 24
o Entnehmen der belackten Substrate 2
o Übergeben auf den Sekundärteil S der Vorrichtung
o Übernehmen der Substrate 2 aus dem Sekundärteil S
o Be- und Entladen eines Inspektionssystems 9
o Ablegen der Gut-Substrate auf der Ablage 10
o gesondertes Ablegen der Schlecht-Substrate auf der Ablage 11
Gleichzeitig befindet sich dieser Teil des Handhabungssystems in einem entsprechend ausgebildeten, in die Maschine integrierten Reinraum kleinstmöglicher Abmessungen.

Der Sekundärteil S der Vorrichtung P und S beinhaltet folgende Prozeßeinheiten:
o multifunktionales UV-Härtungssystem 14, 18,
o bis zu maximal drei Siebdruckeinheiten 16, 17 und,
sofern nur zwei Siebdruckeinheiten 16, 17 eingebaut sind,
o ein zusätzlich mögliches Druckbildkontrollgerät 19.

Der zweite Teil S besteht aus einem drehbaren Substrathalter oder Drehtisch 13, der in äquidistanter Verteilung und in kreisförmiger Anordnung eine gewisse Anzahl von Substrathalterungen 25 aufweist, in den die Substrate 2 mit Hilfe von pneumatischen Vorrichtungen gespannt werden.

In diesem zweiten Teil S werden die Substrate 2 schrittweise auf einer Kreisbahn von einer Übernahmeposition, wo sie auf eine Substrathalterung (25) gespannt werden, über eine multifunktionale UV-Härtungseinheit 14 und eine Justiereinheit 15 in die erste Siebdruckstation 16 transportiert.

Danach folgt das Aushärten der UV-Siebdruckfarbe in einer nachgeschalteten UV-Härtungseinrichtung 18. Zur Lösung der Aufgabe - die Möglichkeit ein Dreifarben-Siebdruckbild auf das Substrat aufzubringen, bei der gleichzeitigen Minimierung von UV-Härtungseinrichtungen - wurde eine spezielle Aufteilung von Prozeßeinheiten und Schrittweite des Antriebs festgelegt.

Daraus ergibt sich die Möglichkeit, die erste im Prozeßablauf angeordnete UV-Härtungseinrichtung sowohl für die Härtung des UV-Schutzlackes als auch für die Härtung der UV-Siebdruckfarbe nach der zweiten Siebdruckeinheit 17 in Abwechslung einzusetzen.

Nach dem Aufbringen des dritten Siebdrucks in der dritten Siebdruckeinheit wird das Substrat durch die UV-Härtungseinrichtung transportiert, wobei die Siebdruckfarbe aushärtet und anschließend das Substrat in der Übergabeposition von der Substrathalterung 25 gelöst wird.

In einer Ausführung mit nur zwei Siebdruckeinheiten 16, 17 besteht außerdem die Möglichkeit, ein Druckbildkontrollgerät 19 zu installieren. Die Ausführung des Substrathalters gestattet zudem die Minimierung an Handhabungsfunktionen für die Zuführung der Substrate zu den einzelnen Prozeßeinheiten (UV-Härtungssysteme und Siebdruckeinheiten).

Durch diese Lösung werden die Handhabungsschritte drastisch reduziert und gleichzeitig eine Mehrfachbenutzung von Prozeßeinheiten ermöglicht.

Das erfindungsgemäße Handhabungssystem ermöglicht eine besonders kompakte und kostengünstige Konfiguration aller Prozeßeinheiten, die eine steuerungstechnisch einfache Lösung erlaubt, wobei die Produktions-Zykluszeit von ca. 6 Sekunden bekannte Vorrichtungen dieser Art übertrifft.

Von besonderem Einfluß auf das rasche Arbeiten der erfindungsgemäßen Vorrichtung ist die Substrattransporteinrichtung, bestehend aus einem längs einer geraden Linie hin und her bewegbaren Transportschlitten 3 mit jeweils drei beiderseits des Schlittens 3 angeordneten Transportarmen 4, 4', 4'' bzw. 5, 5', 5'' mit Substratgreifern 6, 6', 6'' bzw. 7, 7', 7''.

Der Transportschlitten 3 ist motorisch bewegbar, und zwar um eine Strecke a, wobei die Bewegung jeweils längs einer Linie C erfolgt, die etwa rechtwinklig zur Längserstreckung D der Spritzgießmaschine 12 verläuft.

Die an den Transportarmen 4, 4', 4'' vorgesehenen Substratgreifer 6, 6', 6'' sind kreisscheibenförmig ausgebildet und dienen gleichzeitig als Verschlußdeckel 28 für die Einschleus- bzw. Ausschleusöffnung der Sputtereinrichtung 8.

Es ist klar, daß zumindest die als Verschlußdeckel 28 ausgebildeten Substratgreifer um ein geringes Maß in vertikaler Richtung bewegbar sein müssen, damit sie sich dichtend auf die Ein-/Ausschleusöffnung 23 auflegen können oder von dieser getrennt werden können.

Der Drehtisch 13 weist insgesamt neunzehn Substrathalterungen auf und wird schrittweise (im Takt des hin und her gehenden Transportschlittens 3) gedreht, und zwar jeweils um einen Winkel β, der jeweils zwischen einer ersten und einer dritten benachbarten Substrathalterung (25) und der Rotationsachse (R) des Drehtischs (3) gebildet wird.

Die um den Drehtisch 13 herum angeordneten Prozeßstationen bzw. Bearbeitungseinrichtungen 14 bis 19 sind mit dem Maschinengestell 27 verschraubt und können jederzeit ausgetauscht werden.

### Bezugszeichenliste

- 3: Transportschlitten
- 4, 4', 4'': Transportarm
- 5, 5', 5'': Transportarm
- 6, 6', 6'': Substratgreifer
- 7, 7', 7'': Substratgreifer
- 8: Vakuumbeschichtungsvorrichtung
- 9: Qualitätsprüfvorrichtung
- 10: Ablage für gutbefundene Substrate
- 11: Ablage für auszusondernde Substrate
- 12: Spritzgießmaschine
- 13: Karussell-Transporteinrichtung, Drehtisch
- 14: UV-Trocknungseinrichtung
- 15: Zentriereinrichtung
- 16: Druckeinrichtung
- 17: Druckeinrichtung
- 18: UV-Trocknungseinrichtung
- 19: Bildkontrolleinrichtung
- 20: Übernahmestation
- 21: Abgabestation der Spritzgießmaschine
- 22: Spritzgießmaschine
- 23: Ausschleusstation, Einschleusstation
- 24: Lackierstation
- 25: Substrathalterung
- 26: Profilschiene
- 27: Maschinengestell
- 28: Verschlußdeckel
- R: Rotationsachse des Drehtisches
- C: Bewegungsbahn des Transportschlittens
- D: Längserstreckung der Spritzgießmachine
- E: zur Bewegungsbahn C parallelen Gerade
- S: Sekundärteil
- P: Primärteil
- R: Rotationsachse
- W: Wirkachse
- M: Mantelfläche
- a: Bewegungsstrecke
- A-B: Bewegungsrichtung des Transportschlittens

## Patentansprüche

1. Vorrichtung zum selbsttätigen Gießen, Beschichten, Lackieren, Prüfen und Sortieren von Werkstücken -insbesondere von kreisscheibenförmigen, flachen Substraten aus Kunststoff, wie beispielsweise optischen oder magnetooptischen Datenspeichern - mit mindestens einer die Substrate von einer Herstellstation, beispielsweise einer Spritzgießmaschine (12), zu den Bearbeitungsstationen weiterbefördernden Transporteinrichtung und mit jeweils einer Ablagestation (10, 11) zur getrennten Ablage von fertig bearbeiteten und als einwandfrei befundenen und von mit Fehlern behafteten Werkstücken, **gekennzeichnet durch** eine Substrattransporteinrichtung mit einem längs einer geraden Linie hin und her bewegbaren Transportschlitten (3) mit jeweils drei beiderseits des Schlittens angeordneten Transportarmen (4, 4', 4''; 5, 5', 5'') mit Substratgreifern (6, 6', 6''; 7, 7', 7''), einer auf der einen Seite des Transportschlittens (3) vorgesehenen Vakuumbeschichtungsvorrichtung (8) und einer auf der anderen Seite des Transportschlittens (3) angeordneten Ablageeinrichtung mit mindestens je einer Ablage (10, 11) für gut befundene und für auszusondernde Substrate und einer Vorrichtung zur Qualitätsprüfung (9) und mit einer in der Bewegungsrichtung des Transportschlittens (3), der Spritzgießmaschine (12) gegenüberliegend angeordneten Karussell-Transporteinrichtung oder einem Drehtisch (13) mit verschiedenen, an seinen Umfang angeordneten Lackier-, Trocknungs-, Bedruckungs-, Bildkontroll- und Substrat-Zentriereinrichtungen (14 bis 19), wobei der Drehtisch (13) die Substrate in einer Vielzahl von Transportschritten - vorzugsweise in neunzehn Transportschritten - auf einer Kreisbahn um volle 360° um die vertikale Rotationsachse (R) des Drehtisches (13) bewegt und wobei der Transportschlitten (3) bei seiner Bewegung in der einen Richtung (A) mit einem ersten Arm (4) ein erstes Substrat (2) in einem einzigen Transportschritt von der Übernahmestation (20) der Abgabestation (21) zur Ein- bzw. Ausschleusstation (23) der Vakuumbeschichtungsvorrichtung (8) transportiert und ebenso gleichzeitig mit einem zweiten Transportarm (4) ein zweites Substrat von der Beschichtungsstation (8) zu einer Lackierstation (24) und ebenso ein drittes Substrat von der Lackierstation zum Drehtisch (13) bewegt, der sich schrittweise und im gleichen Takt dreht, und wobei der Transportschlitten (13) bei seiner anschließenden Bewegung in entgegengesetzter Richtung (B) ein fertig bearbeitetes Werkstück zur Prüfvorrichtung (9) und ein bereits geprüftes Werkstück zur ersten Ablage (10) oder ein Werkstück von hier aus zur zweiten Ablage (11) transportiert.

2. Vorrichtung nach Anspruch 1, **dadurch gekennzeichnet,** daß die Bewegungsbahn (C) des mit sechs Transportarmen (4, 4', 4''; 5, 5', 5'') ausgestatteten Transportschlittens (3) einerseits etwa rechtwinklig zur Längserstreckung (D) der Spritzgießmaschine verläuft und andererseits etwa die Rotationsachse (R) des Drehtischs (13) schneidet, wobei die Übernahmestation (20), die Ein- und Ausschleusstation (23), die Lackierstation (24) und eine Substrathalterung (25) des Drehtischs (13) auf einer der Bewegungsbahn (C) parallelen Geraden (E) angeordnet sind.

3. Vorrichtung nach den Ansprüchen 1 und 2, **dadurch gekennzeichnet,** daß die Abstände (a) zwischen der Übernahmestation (20), der Ein- und Ausschlusstation (23), der Lackierstation (24) und der mit diesen auf einer Geraden (E) stehenden Substrathalterung (25) und die Abstände (a) zwischen der zweiten Ablage (11), der ersten Ablage (10), der Prüfvorrichtung (9) und der mit diesen auf einer Geraden (E') stehenden Substrathalterung (25) jeweils gleich groß sind.

4. Vorrichtung nach einem oder mehreren der vorhergehenden Ansprüche, **dadurch gekennzeichnet,** daß auf dem Drehtisch (13) eine Vielzahl von Substrathalterungen (25) - vorzugsweise neunzehn Substrathalterungen (also eine ungerade Zahl) - vorgesehen sind, deren Abstände voneinander jeweils gleich groß bemessen sind, wobei die Bearbeitungsstationen (14 bis 19) zum Bedrucken, Trocknen, Zentrieren und Kontrollieren mit etwa gleichen Abständen etwa gleichmäßig auf dem Umfang des Drehtisches, im wesentlichen oberhalb der Substrate (2), angeordnet sind.

5. Vorrichtung nach den vorhergehenden Ansprüchen, **dadurch gekennzeichnet,** daß der insgesamt sechs Transportarme (4, 4', 4''; 5, 5', 5'') aufweisende Transportschlitten (3) im Takt der Maschine abwechselnd um jeweils den Transportschritt (a) motorisch hin (in Richtung A) und her (in Richtung B) bewegbar, synchron mit dem schrittweise Weiterschalten des Drehtellers um einen Winkel (β) erfolgt, der jeweils zwischen einer ersten und einer dritten benachbarten Substrathalterung (25) und der Rotationsachse (R) des Drehtischs (3) gebildet wird.

6. Vorrichtung nach den vorhergehenden Ansprüchen, **dadurch gekennzeichnet,** daß der Transportschlitten (3) in einer Profilschiene (26) gehalten und geführt ist und über einen an sich bekannten pneumatischen, elektrischen oder magnetischen Antrieb hin und her bewegbar ist und beiderseits seiner Längserstreckung mit jeweils drei Transportarmen gleicher Länge (4, 4', 4''; 5, 5', 5'') versehen ist.

7. Vorrichtung nach den vorhergehenden Ansprüchen, **dadurch gekennzeichnet,** daß die Übernahmestation (20), die Substrathalterungen (25), die Ein- und Ausschleusstation (23), die Bearbeitungsfläche der Lackierstation (24), der Trocknungseinrichtungen (14, 18) und der Zentriereinrichtung (15) und die Bearbeitungsfläche der Druckeinrichtungen (16, 17) und Qualitätsprüfeinrichtung (9) sämtlich auf der gleichen Transportebene bzw. Vorrichtungsebene angeordnet sind.

8. Vorrichtung nach einem oder mehreren der vorhergehenden Ansprüche, **dadurch gekennzeichnet,** daß die dem Drehtisch (13) zugeordneten Bearbeitungs- und Behandlungsstationen bzw. -einrichtungen (14 bis 19) austauschbar bzw. lösbar auf oder an dem Maschinengestell (27) gehalten und befestigt sind.

9. Vorrichtung nach einem oder mehreren der vorhergehenden Ansprüche, **dadurch gekennzeichnet,** daß der Transportschlitten (3) Substrate (2) gleichzeitig sowohl in der einen als auch in der anderen Richtung (A, B) transportiert, wobei zumindest einer der an einem der Transportarme (4, 4', 4''; 5, 5', 5'') fest angeordneten kreisscheibenförmigen Substrathalter gleichzeitig als Verschlußdeckel (28) für die Ein- bzw. Ausschleusöffnung der Vakuumkammer einer Vakuumbeschichtungskammer (8) wirkt.

## Claims

1. Device for the automatic casting, coating, painting, testing and sorting of workpieces - in particular circular disc-shaped, flat substrates made of plastics material, such as for example optical or magneto-optical data storage devices - having at least one conveying device which conveys the substrates from a production station, for example an injection moulding machine (12), to the processing station and having in each case a depositing station (10, 11) for depositing separately workpieces of which the processing is complete and which are found to be perfect and workpieces which are defective, characterized by a substrate conveying device having a conveyor slide (3) which can move in a reciprocating manner along a straight line with in each case three conveyor arms (4, 4', 4''; 5, 5', 5'') disposed on either side of the slide with substrate gripping devices (6, 6', 6''; 7, 7', 7''), a vacuum coating device (8) disposed on one side of the conveyor slide (3) and a depositing device which is disposed on the other side of the conveyor slide (3) with at least one depositing device (10, 11) in each case for substrates which are found to be good and substrates which are to be separated out and with a quality testing device (9) and with a carousel conveyor device or a turntable (13) which is disposed opposite the injection moulding machine (12) in the direction of movement of the conveyor slide (3) and has various painting, drying, printing, image-control and substrate centring devices (14 to 19) disposed on its periphery, the turntable (13) moving the substrates in a plurality of conveying steps - preferably in nineteen conveying steps - on a circular path through a complete 360° about the vertical axis of rotation (R) of the turntable (13) and the conveyor slide (3), as it moves in the one direction (A), conveying with a first arm (4) a first substrate (2) in a single conveying step from the take-over station (20) of the delivery station (21) to the insertion and removal station (23) of the vacuum coating device (8) and likewise simultaneously with a second conveyor arm (4) moving a second substrate from the coating station (8) to a painting station (24) and likewise moving a third substrate from the painting station to the turntable (13) which rotates in steps and at the same rhythm, and the conveyor slide (3), as it subsequently moves in the opposite direction (B), conveying a finished workpiece to the testing device (9) and a workpiece which has already been tested to the first depositing device (10) or a workpiece from the latter to the second depositing device (11).

2. Device according to Claim 1, characterized in that the path of movement (C) of the conveyor slide (3) equipped with six conveyor arms (4, 4', 4''; 5, 5', 5'') extends on the one hand approximately at a right-angle to the longitudinal extension (D) of the injection moulding machine and on the other hand approximately intersects the axis of rotation (R) of the turntable (13), the take-over station (20), the insertion and removal station (23), the painting station (24) and a substrate holding device (25) of the turntable (13) being disposed on a straight line (E) parallel to the path of movement (C).

3. Device according to Claims 1 and 2, characterized in that the spacings (a) between the take-over station (20), the insertion and removal station (23), the painting station (24) and the substrate holding device (25) which is located with the latter on a straight line (E) and the spacings (a) between the second depositing device (11), the first depositing device (10), the testing device (9) and the substrate holding device (25) which is located with the latter on a straight line (E') are the same size in each case.

4. Device according to one or more of the preceding claims, characterized in that provided on the turntable (13) is a plurality of substrate holding devices (25), preferably nineteen substrate holding devices (i.e. an uneven number), the spacings between which being the same size in each case, the processing stations (14 to 19) for printing, drying, centring and testing being disposed at approximately identical spacings approximately uniformly on the periphery of the turntable, substantially above the substrates (2).

5. Device according to the preceding claims, characterized in that the conveyor slide (3) comprising a total of six conveyor arms (4, 4', 4''; 5, 5', 5'') can be moved by a motor in a reciprocating manner (in directions A and B respectively) at the rhythm of the machine alternately by the conveying step (a) in each case, synchronously as the turntable is stepped up in steps about an angle (β) which is formed in each case between a first and a third adjacent substrate holding device (25) and the axis of rotation (R) of the turntable (13).

6. Device according to the preceding claims, characterized in that the conveyor slide (3) is mounted and guided in a profiled rail (26) and can be moved in a reciprocating manner by means of a pneumatic, electric or magnetic drive known per se and is provided on either side of its longitudinal extension with three conveyor arms (4, 4', 4''; 5, 5', 5'') of the same length in each case.

7. Device according to the preceding claims, characterized in that the take-over station (20), the substrate holding devices (25), the insertion and removal station (23), the processing surfaces of the painting station (24), of the drying devices (14, 18) and of the centring device (15) and the processing surfaces of the printing devices (16, 17) and the quality testing device (9) are all disposed on the same conveying plane or device plane.

8. Device according to one or more of the preceding claims, characterized in that the processing and handling stations or devices (14 to 19) associated with the turntable (13) are mounted and secured on or at the machine frame (27) so as to be removable or detachable.

9. Device according to one or more of the preceding claims, characterized in that the conveyor slide (3) conveys substrates (2) simultaneously both in the one and in the other direction (A, B), at least one of the circular disc-shaped substrate holding devices rigidly disposed on one of the conveyor arms (4, 4', 4''; 5, 5', 5'') simultaneously acting as a closure cover (28) for the insertion and removal opening of the vacuum chamber of a vacuum coating chamber (8).

## Revendications

1. Dispositif automatique pour le coulage, le revêtement, la peinture, la vérification et le triage de pièces façonnées - en particulier de substrats plats discoïdes en matière synthétique, tels que par exemple des mémoires de données optiques ou magnéto-optiques-, avec au moins un dispositif de transport, poursuivant le transport des substrats depuis un poste de fabrication, par exemple une machine de moulage par injection (12), aux postes d'usinage, et avec chaque fois avec un poste de dépose (10, 11) destiné à opérer une dépose séparée des pièces façonnées dont l'usinage est terminé et qui se sont avérées parfaites et de celles grévées de défauts par des défauts, caractérisé par un dispositif de transport de substrats, avec un chariot de transport (3) susceptible de se déplacer dans un sens et dans l'autre le long d'une ligne droite, avec chaque fois trois bras de transport (4, 4', 4''; 5, 5', 5''), disposés de part et d'autre du chariot, équipés de préhenseurs de substrats (6, 6', 6''; 7, 7', 7''), un dispositif de revêtement sous vide (8), prévu d'un côté du chariot de transport (3), et un dispositif de dépose, disposé de l'autre côté du chariot de transport (3), avec respectivement un emplacement de dépose (10, 11) pour les substrats s'étant avérés bons et pour ceux devant être séparés, et un dispositif de contrôle de qualité (9) et avec un dispositif de transport à carrousel disposé en face ou à l'opposé de la machine de moulage par injection (12) dans la direction de transport du chariot de transport (3), ou bien une table tournante (13) équipée, sur sa périphérie, de différents dispositifs (14 à 19) de peinture, de séchage, d'impression, de contrôle d'image et de centrage de substrats, la table tournante (13) déplaçant les substrats en une pluralité d'étapes de transport - de préférence en dix-neuf étapes de transport - sur une piste circulaire, de la valeur d'un tour complet de 360°, autour de l'axe de rotation vertical (R), de la table tournante (13) et le chariot de transport (3) transportant lors de son déplacement dans une première direction (A), à l'aide d'un premier bras (4), un premier substrat (2) dans une étape de transport unique, depuis le poste de transfert (20) du poste de dépose (21), jusqu'au poste d'introduction ou d'extraction (23) du dispositif de revêtement sous vide (8), et déplaçant également simultanément, à l'aide d'un deuxième bras de transport (4), un deuxième substrat, depuis le poste de revêtement (8) jusqu'à un poste de peinture (24) et également un troisième substrat, du poste de peinture à la table tournante (13), qui tourne par valeurs d'un pas et à la même cadence, et le chariot de transport (13) transportant lors de son déplacement subséquent, dans la direction inverse (B) une pièce façonnée dont l'usinage est terminé, en direction du dispositif de vérification (3), et une pièce façonnée déjà contrôlée vers la première dépose (10), ou bien une pièce façonnée depuis cet endroit jusqu'à une deuxième dépose (11).

2. Dispositif selon la revendication 1, caractérisé en ce que la trajectoire de déplacement (C) du chariot de transport (3) équipé de six bras de transport (4, 4', 4''; 5, 5', 5''), s'étend, d'une part, à angle droit par rapport à la direction longitudinale (D) de la machine de moulage par injection et, d'autre part, coupe pratiquement l'axe de rotation (R) de la table tournante (13), le poste de transfert (20), le poste d'introduction et d'extraction (23), le poste de peinture (24) et une fixation de substrat (25) de la table tournante (13) étant disposés sur une droite (E) parallèle par rapport à la direction de déplacement (C).

3. Dispositif selon la revendication 1 et 2, caractérisé en ce que les espacements (a) entre le poste de transfert (20), le poste d'introduction et d'extraction (23), le poste de peinture (24) et la fixation de substrats (25) située avec ceux-ci sur une droite (E) et les espacements (a), entre le deuxième déposoir (11), le premier déposoir (10), le dispositif de vérification (9) et la fixation de substrats (25), située avec ceux-ci sur une droite (E'), étant chacun de même valeur.

4. Dispositif selon l'une ou plusieurs des revendications précédentes, caractérisé en ce que sont prévues sur la table tournante (3) une pluralité de fixations de substrats (25) - de préférence dix-neuf fixations de substrats (donc un nombre impair) - dont les espacements mutuels sont chacun égaux, les postes d'usinage (14 à 19) destinés à l'impression, au séchage, au centrage et au contrôle étant disposés avec des espacements à peu près égaux, à peu près réguliers, sur la périphérie de la table tournante, sensiblement au-dessus des substrats (2).

5. Dispositif selon l'une des revendications précédentes, caractérisé en ce que le chariot de transport (3) qui présente les bras de transport (4, 4', 4''; 5, 5', 5''), dont le nombre global est de six, sont déplaçables à la cadence de la machine, alternativement dans un sens (dans la direction A) et dans le sens inverse (dans la direction B), chaque fois de la valeur d'un pas de transport (a) et au moyen d'un moteur, de façon synchrone par rapport à la continuation, pas-à-pas, du mouvement du plateau tournant, d'un angle (β) qui est chaque fois formé entre une première fixation de substrat et une troisième fixation de substrat (25) voisine et l'axe de rotation (R) de la table tournante (3).

6. Dispositif selon les revendications précédentes, caractérisé en ce que le chariot de transport (3) est maintenu et guidé dans une glissière profilée (26) et est déplaçable dans un sens et dans l'autre, par l'intermédiaire d'un entraînement pneumatique, électrique ou magnétique, connu en soi, et pourvu, de part et d'autre de sa dimension longitudinale, respectivement de trois bras de transport (4, 4', 4''; 5, 5', 5'') de longueur égale.

7. Dispositif selon les revendications précédentes, caractérisé en ce que le poste de transfert (20), les fixations de substrat (25), le poste d'introduction et d'extraction (23), la surface d'usinage du poste de peinture (24), les dispositifs de séchage (14, 18) et le dispositif de centrage (15) et la surface d'usinage des dispositifs d'impression (16, 17) et le dispositif de contrôle de qualité (9) sont disposés globalement sur le même plan de transport, respectivement sur le même plan de dispositif.

8. Dispositif selon l'une ou plusieurs des revendications précédentes, caractérisé en ce que les postes ou dispositifs d'usinage et de traitement (14 à 19) associés à la table tournante (13) sont maintenus et fixés de façon remplaçable, respectivement désolidarisable, sur ou au bâti machine (27).

9. Dispositif selon l'une ou plusieurs des revendications précédentes, caractérisé en ce que le chariot de transport (3) transporte simultanément tant dans la première direction qu'également dans la deuxième direction (A, B) au moins l'un des supports de substrats discoïdes circulaires disposés rigidement sur l'un des bras de transport (4, 4', 4''; 5, 5', 5''), agissant simultanément commde couvercles de fermeture (28), pour l'ouverture d'introduction, respectivement d'extraction de la chambre à vide, d'une chambre de revêtement sous vide (8).
